# EUROPÄISCHE PATENTSCHRIFT

(11) **EP 1 214 230 B1**
(45) Veröffentlichungstag und Bekanntmachung des Hinweises auf die Patenterteilung: **02.11.2005**
(21) Anmeldenummer: 00963977.4
(22) Anmeldetag: 07.09.2000
(51) Int. Cl.: B60R 25/02

(54) **ELEKTRISCHE LENKUNGSVERRIEGELUNGSVORRICHTUNG**
ELECTRIC STEERING LOCK DEVICE
DISPOSITIF DE VERROUILLAGE ELECTRIQUE DE LA DIRECTION

(30) Priorität: 24.09.1999 DE 19945867
(43) Veröffentlichungstag der Anmeldung: 19.06.2002
(73) Patentinhaber: Marquardt GmbH, 78604 Rietheim-Weilheim (DE)
(72) Erfinder: MÜLLER, Karl, 78628 Rottweil-Neufra (DE); SCHWARZ, Thomas, 78573 Wurmlingen (DE); GEBER, Michael, 72574 Bad Urach (DE); HUBRIG, Jürgen, 88212 Ravensburg (DE); POHLMANN, Andreas, 71263 Weil der Stadt (DE)
(74) Vertreter: Eisele, Otten, Roth & Dobler
(86) Internationale Anmeldenummer: PCT/DE2000/003095
(87) Internationale Veröffentlichungsnummer: WO 2001/023229

(56) Entgegenhaltungen:
- EP-A- 0 498 126
- EP-A- 1 044 857
- WO-A-86/02051
- DE-A- 4 434 587
- DE-C- 19 634 627

## Beschreibung

Die Erfindung bezieht sich auf eine elektrische Lenkungsverriegelungsvorrichtung mit Stellmitteln, die zwischen einem Verriegelungs- und einem Entriegelungszustand umsteuerbar sind, mit Steuerungsmitteln zur Ansteuerung der Stellmittel und mit Spannungsversorgungsmitteln für die Stellmittel. Derartige Vorrichtungen sind insbesondere in Automobilen als sogenannte elektrische oder elektronische Lenkradverriegelungen gebräuchlich.

Die Lenkungsverriegelung erfüllt eine Wegfahrsperrfunktion, indem sie ein Lenkelement, wie ein Lenkrad, einen Lenkhebel oder ein anderes Bedienelement zur Fahrzeugquerdynamiksteuerung, verriegelt hält, solange sich der Fahrzeugnutzer nicht über ein entsprechendes Authentikationsmittel, z.B. einen mechanischen oder elektronischen Schlüssel als fahrberechtigt ausgewiesen hat. Dazu ist die Lenkungsverriegelung häufig mit einer Zündstartschaltereinheit mit der Maßgabe gekoppelt, daß sichergestellt werden soll, daß sich beim Starten des Motors die Lenkungsverriegelung in ihrem entriegelten Zustand befindet.

Bei einer Vorrichtung der eingangs genannten Art, wie sie in Fahrzeugen der DaimlerChrysler AG zu finden ist, ist die Lenkradverriegelung an eine Zündstartschaltereinheit gekoppelt, die durch ein mechanisches Zündschlüssel-Zündschloß-System gebildet ist, bei dem das Zündschloß durch einen fahrberechtigenden Schlüssel betätigt werden kann. Dabei kann das Zündschloß bekanntermaßen zwischen vier Stellungen verdreht werden, nämlich einer "0"-Stellung, in welcher der Schlüssel ein- und ausgesteckt werden kann und die Zündung sowie die Bordnetzversorgung abgeschaltet sind, einer "15R"-Stellung, in der die Bordnetzversorgung bei noch ausgeschalteter Zündung aktiviert ist, einer "15"-Stellung, in der die Zündung eingeschaltet ist und in der sich das Zündschloß im normalen Fahrbetrieb befindet, sowie einer "50"-Stellung, in die das Zündschloß kurzzeitig zum Starten des Motors gedreht wird. Die Zahlenbezeichnungen für diese Zündschloßstellungen leiten sich aus den Bezeichnungen für die betreffenden standardisierten Klemmen ab, deren Stromkreis vom Zündschloß in der jeweiligen Stellung geschlossen wird. Die Lenkradverriegelungsvorrichtung umfaßt eine Steuereinheit und eine vor dieser angesteuerte Stelleinheit und wird über eine Versorgungsleitung, genauer gesagt über die standardisierte "Klemme 30", gespeist. Bei fehlender Spannungsversorgungsankopplung befindet sich die Lenkungsverriegelungsvorrichtung im entriegelten Zustand. Von dort kann sie durch Zuführen der nötigen elektrischen Betriebsenergie in ihren verriegelten Zustand gebracht werden. Die Versorgungsleitung ist über das drehbare Zündschloß geführt, das als eingeschleiftes, mechanisches Schaltelement fungiert. Dabei hält es die Versorgungsleitung geschlossen, solange es nach einer erfolgreichen Schlüsselauthentikation noch nicht um mehr als einen vorgebbaren Schwellwert-Winkel aus seiner Ausgangsstellung, d.h, der "0"-Stellung, herausgedreht wurde, so daß sich die Lenkradverriegelung so lange in ihrem verriegelten Zustand befinden kann. Wenn das Zündschloß den vorgegebenen Schwellwert-Winkel überschritten hat, unterbricht es die Versorgungsleitung, wodurch sichergestellt werden soll, daß sich die Lenkungsverriegelung beim anschließenden Starten des Fahrzeugmotors in ihrem entriegelten Zustand befindet.

Aus der WO 86/02051A1 ist, dem Oberbegriff des Anspruchs 1 entsprechend, ebenfalls eine elektrische Lenkungsverriegelungsvorrichtung der eingangs beschriebenen Art bekannt. Als Stellmittel ist hier eine mit einer permanentmagnetisierten Hülse zusanunenwirkende Spule vorgesehen, wobei die Hülse zwischen zwei Stellungen entsprechend der Richtung des jeweiligen Stromflusses in der Spule bewegt wird. Zur Spannungsversorgung der Spule dient eine mit dem Pluspol der Spannungsquelle verbundene Zuleitung. Die Stromrichtung in der Spule ist mittels eines als Steuerungsmittel dienenden Schalters umschaltbar, der in die mit dem Minuspol der Spannungsquelle verbundene Zuleitung eingeschleift ist.

Weiter ist aus der EP 0 498 126 A1 eine elektrische Lenkungsverriegelungsvorrichtung bekannt, bei der mittels eines Motors eine Kupplung für die Lenkradsäule zwischen einem Verriegelungs- oder Entriegelungszustand axial verschiebbar ist. Die Bewegung des Motors in den Entriegelungs- sowie Verriegelungszustand wird durch jeweils eine Relais-Schaltung als Stellmittel gesteuert. Zur Ansteuerung der Stellmittel wird ein Mikroprozessor verwendet, der seinerseits mit einer Zündstartschaltereinheit gekoppelt ist.

Schließlich ist aus der Patentschrift DE 196 34 627 C1 die Ankopplung einer Lenkradverriegelung an eine elektronische Wegfahrsperre beschrieben, wobei die Lenkradverriegelung einen Riegel als Stellelement aufweist, dessen Bewegung zwischen einer Entriegelungs- und einer Verriegelungsposition mittels einer sperreinrichtung blockiert wird, wenn die elektronische Wegfahrsperre geschärft ist. Beim Entschärfen derselben gibt die Sperreinrichtung den Riegel frei, der daraufhin in seine Entriegelungsposition bewegbar ist, z.B. durch den Kopf eines Fahrzeugschlüssels, durch einen separaten Transponder oder durch einen Bowdenzug. Alternativ kann das Betätigen des Riegels durch Drehen eines in ein Zündschloß eingesteckten Zündschlüssels erfolgen, wie dies aus den in der DE 196 34 627 C1 zitierten Offenlegungsschriften DE 44 34 587 A1 und DE 44 46 613 A1 bekannt ist.

In modernen Automobilen werden zunehmend rein elektronische Zündstartschaltereinheiten ohne mechanisches Zündschlüssel-Zündschloß-System verwendet, insbesondere Systeme ohne aktive Schlüsselbetätigung, die als "Keyless-go"-Systeme bezeichnet werden. Bei diesen Systemen werden eine Schließanlage und eine elektronische Wegfahrsperre über drahtlose Kommunikation durch ein Authentikationselement, z.B. in Form einer Chipkarte, gesteuert, das hierzu vom Benutzer lediglich mitgeführt werden braucht, ohne daß es einer weiteren Handhabung desselben bedarf. Bei solchen Systemen beinhaltet die Zündstartschaltereinheit zum Ein- und Ausschalten der Zündung und zum Starten des Motors typischerweise keine mechanische Schlüssel-Schloß-Einheit, sondern entsprechende Tastschalter. Andererseits ist es auch für diese Systeme wünschenswert, verhindern zu können, daß sich eine vorhandene Lenkradverriegelung bei laufendem Fahrzeugmotor versehentlich noch in ihrem verriegelten Zustand befindet.

Zur Lösung dieser Problematik ist in der nicht vorveröffentlichen, älteren EP 1 044 857 A (Stand der Technik nach Artikel 54 (3) und (4) EPÜ) eine kombinierte Zündstartschalter- und Lenkradverriegelungsvorrichtung beschrieben, bei der eine Lenkradverriegelungseinheit und eine Zündstartschaltereinheit miteinander über spezielle Kopplungsmittel gekoppelt sind, die insbesondere Zustandsabfrage- und Startblockiermittel umfassen. Beim Anfordern eines Motorstarts durch den Fahrzeugnutzer fragen die Zustandsabfrage- und Startblockiermittel den Verriegelungszustand der Lenkradverriegelung ab und lassen den angeforderten Motorstart nur dann zu, wenn sich die Lenkradverriegelung im entriegelten Zustand befindet. Dies gewährleistet, daß sich die Lenkradverriegelung im laufenden Fahrbetrieb des Fahrzeugs im entriegelten Zustand befindet, ohne daß sie zwangsläufig durch die Zündstartschaltereinheit vor dem Bewirken eines Motorstarts in diesen Zustand z.B. durch Unterbrechung einer Versorgungsleitung geschaltet werden müßte. Diese Vorrichtung eignet sich daher insbesondere auch für die erwähnten Keyless-go-Systeme.

Eine Schwierigkeit von Systemen mit der vorstehend erwähnten Zustandsabfragefunktionalität besteht darin, daß eine Motorstartanforderung, z.B. durch Weiterdrehen eines als gültig erkannten elektronischen Schlüssels, erst mit einer Verzögerungszeit dann freigegeben wird, wenn die Lenkungsverriegelung dem elektronischen Zündstartschalter zurückgemeldet hat, daß sie sich im entriegelten Zustand befindet. Ein weiterer beachtenswerter Gesichtspunkt ist der Wunsch, die Zustandserkennung der Lenkungsverriegelung, insbesondere die Erkennung des entriegelten Zustands, sicher und zuverlässig vorzunehmen und zu diesem Zweck einen hierfür indikativen Signalflankenwechsel eines Positionssensbrs durch erneutes Ausführen eines Entriegelungsbefehls zu überprüfen, wozu die Lenkungsverriegelungs-Stellmittel, speziell ein zugehöriger Antrieb, mit der nötigen Spannung zu versorgen sind.

Der Erfindung liegt als technisches Problem die Bereitstellung einer elektrischen Lenkungsverriegelungsvorrichtung der eingangs genannten Art zugrunde, die eine zuverlässige Ver- und Entriegelung einer Lenkung ermöglicht und es insbesondere erlaubt, daß ein gesicherter Entriegelungsvorgang unabhängig von der Position eines Schlüssels in einem zugehörigen Zündschloß durchgeführt und/oder der Schlüssel im Zündschloß unabhängig vom Zustand der Lenkungsverriegelung uneingeschränkt und unverzögert betätigt werden kann.

Die Erfindung löst dieses Problem durch die Bereitstellung einer elektrischen Lenkungsverriegelungsvorrichtung mit den Merkmalen des Anspruchs 1. Bei dieser Lenkungsverriegelungsvorrichtung beinhalten die Spannungsversorgungsmittel für die Lenkungsverriegelungs-Stellmittel charakteristischerweise zwei getrennte Versorgungspfade, nämlich einen Entriegelungs-Versorgungspfad, der den Stellmitteln die zum Verbringen, d.h. zum Umsteuern bzw. Umschalten, in ihre Entriegelungsstellung benötigte elektrische Energie bereitstellt, und einen Verriegelungs-Versorgungspfad, der ihnen die zum Verbringen in ihre Verriegelungsstellung benötigte elektrische Energie bereitstellt. Dabei erfolgt die Bereitstellung der Energie zum Verbringen der Stellmittel in ihre Entriegelungsstellung permanent, während die Bereitstellung der Energie zum Verbringen der Stellmittel in ihre Verriegelungsstellung durch ein oder mehrere Schaltelemente unterbrechbar ist, die nutzerseitig betätigbar sind. Auf diese Weise ist sichergestellt, daß ein Verriegelungsvorgang der Lenkungsverriegelung nur nach einer durch den Nutzer bewußt herbeigeführten Betätigung des oder der Schaltelemente erfolgen kann, während die Lenkungsverriegelung jederzeit auf entsprechende systemseitige Anforderung hin durch die für diesen Zweck permanent bereitstehende elektrische Energie in ihren entriegelten Zustand verbracht werden kann.

Bei der erfindungsgemäßen Lenkungsverriegelungsvorrichtung ist somit unabhängig von der Stellung nutzerseitig betätigbarer Schaltelemente, insbesondere unabhängig von der Drehposition eines Schlüssels in einem Zündschloß, die Durchführung eines Entriegelungsvorgangs möglich, z.B. zur Überprüfung von Signalflankenwechseln eines zugehörigen Positionssensors. Ein Verriegelungsmechanismus für die Schlüsseldrehung im Zündschloß kann entfallen. Der Entriegelungsvorgang für die Lenkungsverriegelung kann, z.B. kryptologisch gesichert, unabhängig von der Schlüsselposition im Zündschloß und unabhängig vom Klemmenstatus durchgeführt werden. Andererseits ist gewährleistet, daß die Lenkungsverriegelung nur in nutzerseitig kontrollierbaren Situationen in ihren verriegelten Zustand gesteuert wird.

In einer vorteilhaften Systemauslegung beinhalten die Lenkungsverriegelungs-Stellmittel ein von einem Stellantrieb betätigtes Stellglied und zwei zugeordnete, parallele Relais, von denen sich das eine im Entriegelungs-Versorgungspfad und das andere im Verriegelungs-Versorgungspfad befindet. Eine zugehörige Lenkungsverriegelungs-Steuereinheit steuert die Relais. Am Relais des Entriegelungs-Versorgungspfades liegt die Versorgungsspannung permanent an, während die Spannungsversorgung zum Relais des Verriegelungs-Versorgungspfades von dem oder den benutzerbetätigten Schaltelementen unterbrechbar ist.

In einer vorteilhaften Weiterbildung der Erfindung nach Anspruch 3 bilden ein Schaltelement einer elektrischen Zündstartschaltereinheit und/oder ein Schaltelement einer Gangwahlschaltereinheit und/oder ein Schaltelement einer Türkontakteinheit jeweils eines der einen oder mehreren benutzerbetätigten Schaltelemente im Verriegelungs-Versorgungspfad, so daß die Lenkungsverriegelung jeweils nur dann in den verriegelten Zustand gesteuert werden kann, wenn das oder die besagten Schaltelemente vom Benutzer in eine entsprechende Schaltstellung gebracht worden sind.

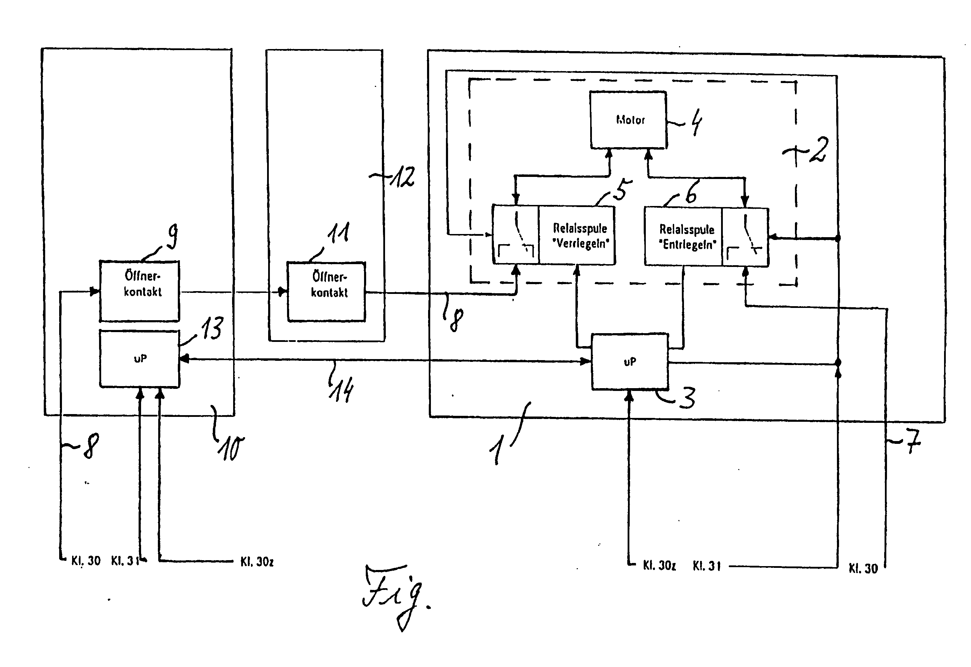

Eine vorteilhafte Ausführungsform der Erfindung ist in der Zeichnung dargestellt und wird nachfolgend beschrieben.

Die einzige Figur zeigt ein Blockschaltbild einer elektrischen Lenkungsverriegelungsvorrichtung mit angekoppelter Zündstartschaltereinheit und Gangwahlschaltereinheit.

Das gezeigte, in ein Automobil implementierte System beinhaltet eine elektrische Lenkungsverriegelungsvorrichtung 1, die zugehörige Stellmittel 2 und Steuerungsmittel 3 umfaßt. Die Lenkungsverriegelungs-Stellmittel 2 beinhalten einen Stellmotor 4, an den in nicht näher gezeigter Weise ein mechanisch betätigbares Stellelement angekoppelt ist. Der Stellmotor 4 und damit das angekoppelte Stellelement können zwischen einem entriegelten und einem verriegelten Zustand umgesteuert werden. Im entriegelten Zustand gibt das Stellelement die Betätigung eines Lenkelementes des Fahrzeugs, z.B. eines Lenkrades, unbeschränkt frei, während es im verriegelten Zustand diese Lenkbewegung blockiert.

Der Stellmotor 4 ist über zwei parallel angeordnete Relaisspulen 5, 6 in jeweils eine von zwei Drehrichtungen ansteuerbar,' wobei die eine Motordrehrichtung das Stellelement in den entriegelten Zustand und die andere Drehrichtung das Stellelement in den verriegelten Zustand versetzt. Mit anderen Worten fungiert die eine Relaisspule 6 als Entriegelungs-Relaisspule und die andere Relaisspule 5 als Verriegelungs-Relaisspule, d.h. bei anliegender Spannungsversorgung und geschlossener Entriegelungs-Relaisspule 6 steuert der Stellmotor 4 das Stellelement in den entriegelten Zustand, während er selbiges in den verriegelten Zustand steuert, wenn bei anliegender Spannungsversorgung die Verriegelungs-Relaisspule 5 geschlossen wird.

Die Ansteuerung der beiden Relaisspulen 5, 6, die mit einem Anschluß ihrer Schaltstrecke mit jeweils einem Spannungsversorgungseingang des Stellmotors 4 zum Drehen desselben in die eine bzw. die andere Drehrichtung verbunden sind, erfolgt über die zugehörigen Steuerungsmittel 3, die von einem Lenkungsverriegelungs-Mikroprozessor gebildet sind. Der Mikroprozessor 3 und die beiden Relaisspulen 5, 6 sind mit je einem Anschluß an die standardisierte "Klemme 31" der Fahrzeugelektrik, d.h. an Masse, angekoppelt, der Mikroprozessor 3 ist darüber hinaus an die standardisierte "Klemme 30z" angeschlossen. Mit einem Spannungsversorgungsanschluß ihrer Schaltstrecke ist die Entriegelungs-Relaisspule 6 charakteristischerweise direkt und permanent über eine entsprechende Versorgungsleitung 7 an die standardisierte "Klemme 30", d.h. an die Bordnetzspannungsversorgung, angeschlossen. Dies bedeutet, daß an der Entriegelungs-Relaisspule 6 über die zugehörige Spannungsversorgungsleitung 7 permanent die Bordnetzspannung ansteht, die dann bei geschlossener Entriegelungs-Relaisspule 6 den Stellmotor 4 beaufschlagt, wodurch dieser und somit das mechanisch an ihn angekoppelte Stellelement in den entriegelten Zustand gebracht wird.

Die Spannungsversorgung zum Bewegen des Stellmotors 4 in den verriegelten Zustand der Lenkungsverriegelung, d.h. die Spannungszufuhr zur Verriegelungs-Relaisspule 5, erfolgt über einen vom Entriegelungs-Versorgungspfad 7 der Entriegelungs-Relaisspule 6 getrennten Verriegelungs-Versorgungspfad, der von einer entsprechenden; an die standardisierte "Klemme 30" angeschlossenen Versorgungsleitung 8 gebildet ist, über welche der Verriegelungs-Relaisspule 5 die Versorgungsspannung nutzerseitig steuerbar bereitgestellt wird. Dazu sind in die Verriegelungs-Spannungsversorgungsleitung 8 ein Öffnerkontakt 9 einer elektronischen Zündstartschaltereinheit 10 als ein erstes benutzerbetätigbares Schaltelement und ein Öffnerkontakt 11 einer Gangwahlschaltereinheit 12 als ein zweites benutzerbetätigbares Schaltelement eingeschleift. Der Öffnerkontakt 11 der Gangwahlschaltereinheit 12 ist in Abhängigkeit von der Position des zugehörigen Gangwahlschalters geöffnet oder geschlossen, z.B. in Abhängigkeit davon, ob sich der Gangwahlschalter eines Automatikgetriebes in einer typischen Fahrbetriebsstellung oder einer typischen Nicht-Fahrbetriebsstellung, wie einer Parkstellung oder Neutralstellung, befindet. Der Öffnerkontakt 9 der elektronischen Zündstartschaltereinheit 10 ist in Abhängigkeit davon geöffnet oder geschlossen, ob ein berechtigender Schlüssel im Zündschloß steckt bzw. in welcher Stellung sich der Schlüssel im Zündschloß befindet.

Die elektronische Zündstartschaltereinheit 10 beinhaltet in herkömmlicher Weise eine Steuereinheit 13 in Form eines Mikroprozessors, der analog wie der Lenkungsverriegelungs-Mikroprozessor 3 an die standardisierte "Klemme 30z" und die standardisierte "Klemme 31" angeschlossen ist. Zudem ist eine Datenaustauschleitung 14 vorgesehen, über welche die beiden Mikroprozessoren 3, 13 in Datenaustauschverbindung stehen. So kann die Steuerung der Lenkungsverriegelung 1 in Abhängigkeit von Informationen von der elektronischen Zündstartschaltereinheit 10 erfolgen. Umgekehrt kann bei Bedarf der elektronischen Zündstartschaltereinheit 10 der Zustand der Lenkungsverriegelung 1 gemeldet werden.

Durch die getrennte Ausführung der Spannungsversorgung der Lenkungsverriegelung 1 mit dem permanenten Entriegelungs-Versorgungspfad 7 und dem unterbrechbaren Verriegelungs-Versorgungspfad 8 wird einerseits sichergestellt, daß die zum Erreichen des entriegelten Zustands benötigte Speisespannung stets an der zugehörigen Entriegelungs-Relaisspule 6 bereitsteht, während andererseits die Einstellung des verriegelten Zustands der Lenkungsverriegelung 1 vom Benutzer kontrollierbar ist, indem die Spannungsbereitstellung für die Verriegelungs-Relaisspule 5 in Abhängigkeit vom Schaltzustand der beiden Öffnerkontakte 9, 11 in der elektronischen Zündstartschaltereinheit 10 bzw. in der Gangwahlschaltereinheit 12 erfolgt. Das Verbringen der Lenkungsverriegelung in ihren verriegelten Zustand wird somit nur dann freigegeben, wenn dies nicht mit den Zuständen der elektronischen Zündstartschaltereinheit 10 und der Gangwahlschaltereinheit 12 kollidiert, wobei die Schaltstellungen der zugehörigen Öffnerkontakte 9, 11 für den Zustand des betreffenden Systemteils indikativ sind und gegebenenfalls die Spannungsversorgung für die Verriegelungs-Relaisspule 5 unterbrechen.

Im übrigen kann die Steuerung der elektrischen Lenkungsverriegelung 1 in einer herkömmlichen bzw. in der Weise erfolgen, wie sie in der oben zitierten, älteren deutschen Patentanmeldung Nr. 199 16 966.7 angegeben ist, ebenso wie umgekehrt die Funktion der elektronischen Zündstartschaltereinheit 10 abhängig vom Zustand der elektrischen Lenkungsverriegelung 1 bzw. von dementsprechend über die Datenaustauschleitung 14 übertragenen Informationen erfolgen kann. Des weiteren versteht sich, daß auch nur einer der beiden Öffnerkontakte 9, 11 als benutzerbetätigte Schaltelemente in die Verriegelungs-Spannungsversorgungsleitung 8 oder aber je nach Anwendungsfall alternativ oder zusätzlich andere benutzerbetätigte Schaltelemente in die Verriegelungs-Spannungsversorgungsleitung 8 eingeschleift sein können, z.B. ein für den Schließzustand einer Fahrzeugtür indikativer Türkontaktschalter.

## Patentansprüche

1. Elektrische Lenkungsverriegelungsvorrichtung
mit zwischen einem Verriegelungs- und einem
Entriegelungszustand umsteuerbaren, einen Stellmotor (4) sowie eine erste Schaltstrecke (6) und eine zweite Schaltstrecke (5) umfassenden Stellmitteln (2) für ein Lenkelement,
mit Steuerungsmitteln (3) zur Ansteuerung der Stellmittel (2) und mit Spannungsversorgungsmitteln (7, 8) für die Stellmittel (2),
wobei die Spannungsversorgungsmittel (7, 8) einen, über die erste Schaltstrecke (6) geführten
Entriegelungs-Versorgungspfad (7) und einen davon getrennten, über die zweite Schaltstrecke (5) geführten
Verriegelungs-Versorgungspfad (8) zur Spannungsversorgung des Stellmotors (4) umfassen,
**dadurch gekennzeichnet,**
**dass** der Entriegelungs-Versorgungspfad (7) den Stellmitteln (2) die zum Verbringen in ihre Entriegelungsstellung benötigte elektrische Energie permanent an der ersten Schaltstrecke (6) bereitstellt,
und **dass** der Verriegelungs-Versorgungspfad (8) den Stellmitteln (2) die zum Verbringen in ihre Verriegelungsstellung benötigte elektrische Energie an der zweiten Schaltstrecke (5) bereitstellt,
wobei in den Verriegelungs-Versorgungspfad (8) ein oder mehrere benutzerbetätigte Schaltelemente (9, 11) zur Unterbrechung der Spannungsversorgung für den Stellmotor (4) eingeschleift sind,
derart, dass ein Verriegelungsvorgang des Lenkelements nur nach einer durch den Nutzer bewusst herbeigeführten Betätigung des oder der Schaltelemente (9, 11) erfolgen kann.

2. Elektrische Lenkungsverriegelungsvorrichtung nach Anspruch 1, weiter
**dadurch gekennzeichnet, daß**
die Stellmittel (2) folgende Elemente enthalten:
- den Stellmotor (4) und ein daran mechanisch angekoppeltes Stellglied, wobei der Stellmotor (4) bei Spannungsbeaufschlagung an einem ersten Eingang das Stellglied in den entriegelten Zustand und bei Spannungsbeaufschlagung an einem zweiten Eingang das Stellglied in den verriegelten Zustand versetzt, und
- zwei parallele Relais (5, 6), die von den Steuerungsmitteln (3) angesteuert werden und von denen ein erstes Relais (6) mit seiner Schaltstrecke einerseits mit dem ersten Eingang des Stellmotors (4) und andererseits mit dem Entriegelungs-Versorgungspfad (7) verbunden ist, während das zweite Relais (5) mit der zweiten Schaltstrecke einerseits mit dem zweiten Eingang des Stellmotors (4) und andererseits mit dem Verriegelungs-Versorgungspfad (8) verbunden ist.

3. Elektrische Lenkungsverriegelungsvorrichtung nach Anspruch 1, weiter
**dadurch gekennzeichnet, daß**
die Stellmittel (2) folgende Elemente enthalten:
- den Stellmotor (4) und ein daran mechanisch angekoppeltes Stellglied, wobei der Stellmotor (4) bei Spannungsbeaufschlagung an einem ersten Eingang das Stellglied in den verriegelten Zustand und bei Spannungsbeaufschlagung an einem zweiten Eingang das Stellglied in den entriegelten Zustand versetzt, und
- zwei parallele Relais (5, 6), die von den Steuerungsmitteln (3) angesteuert werden und von denen ein erstes Relais (5) mit seiner Schaltstrecke einerseits mit dem ersten Eingang des Stellmotors und andererseits mit dem Verriegelungs-Versorgungspfad (8) verbunden ist, während das andere Relais (6) mit seiner Schaltstrecke einerseits mit dem zweiten Eingang des Stellmotors und andererseits mit dem Entriegelungs-Versorgungspfad (7) verbunden ist.

4. Elektrische Verriegelungsvorrichtung nach Anspruch 1, 2 oder 3, weiter
**dadurch gekennzeichnet, daß**
die einen oder mehreren benutzerbetätigten Schaltelemente (9, 11) von einem jeweiligen Schaltelement einer elektrischen Zündstartschaltereinheit (10) und/oder einer Gangwahlschaltereinheit (12) und/oder einer Türkontakteinheit gebildet sind.

## Claims

1. An electric steering lock device
having adjusting means (2) for a steering element which can be shifted between a locked and an unlocked state and which comprise a servo motor (4) and also a first clearance between open contacts (6) and a second clearance between open contacts (5),
having control means (3) for controlling the adjusting means (2) and having voltage supply means (7, 8) for the adjusting means (2),
wherein the voltage supply means (7, 8) comprise an unlocking supply path (7) guided over the first clearance between open contacts (6) and a locking supply path (8) separated therefrom and guided over the second clearance between open contacts (5) for supplying the servo motor (4) with voltage,
**characterised in that** the unlocking supply path (7) provides the adjusting means (2) with the electrical energy required to move said means into their locked position permanently at the first clearance between open contacts (6),
**and in that** the locking supply path (8) provides the adjusting means (2) with the electrical energy required to move them into their locked position at the second clearance between open contacts (5),
wherein one or more user-actuated switching elements (9, 11) are connected into the locking supply path (8) to interrupt the voltage supply for the servo motor (4),
in such a manner that a locking operation of the steering element can only take place after an actuation of the switching element or elements (9, 11) which is intentionally brought about by the user.

2. An electric steering lock device according to Claim 1, further
**characterised in that** the adjusting means (2) contain the following elements:
- the servo motor (4) and an actuator mechanically coupled thereto, wherein the servo motor (4) shifts the actuator into the unlocked state when voltage is supplied at a first input, and shifts the actuator into the locked state when voltage is supplied at a second input,
- two parallel relays (5, 6), which are controlled by the control means (3) and a first relay (6) of which is connected by its clearance between open contacts firstly to the first input of the servo motor (4) and secondly to the unlocking supply path (7), while the second relay (5) is connected by the second clearance between open contacts firstly to the second input of the servo motor (4) and secondly to the locking supply path (8).

3. An electric steering lock device according to Claim 1,
**characterised in that** the adjusting means (2) contain the following elements:
- a servo drive (4) and an actuator mechanically connected thereto, wherein the servo drive (4) shifts the actuator into the locked state when voltage is supplied at a first input and shifts the actuator into the unlocked state when voltage is supplied at a second input, and
- two parallel relays (5, 6), which are controlled by the control means (3) and a first relay (5) of which is connected by its clearance between open contacts firstly to the first input of the actuating drive and secondly to the locking supply path (8), while the other relay (6) is connected by its clearance between open contacts firstly to the second input of the actuating drive and secondly to the unlocking supply path (7).

4. An electric locking device according to Claim 1, 2 or 3, further
**characterised in that** the one or more user-operated switching elements (9, 11) are formed by a respective switching element of an electric ignition starter switch unit (10) and/or a gear selection switch unit (12) and/or a door contact unit.

## Revendications

1. Dispositif de verrouillage électrique de direction comprenant :
- des moyens de réglage (2) pour un élément de direction qui peuvent commuter d'une position verrouillée à une position déverrouillée et qui comprennent un servomoteur (4) ainsi qu'un premier chemin de commutation (6) et un second chemin de commutation (5),
- des moyens de commande (3) pour commander les moyens de réglage (2) et des moyens d'alimentation électrique (7, 8) pour les moyens de réglage (2),
- les moyens d'alimentation électrique (7, 8) comprenant, pour l'alimentation électrique du servomoteur (4), une voie d'alimentation de déverrouillage (7) suivant le premier chemin de commutation (6) et une voie d'alimentation de verrouillage (8), séparée de la voie d'alimentation de déverrouillage, suivant le second chemin de commutation (5),
**caractérisé en ce que**
la voie d'alimentation de déverrouillage (7) procure aux moyens de réglage (2) l'énergie électrique nécessaire à leur passage en position de déverrouillage, en permanence sur le premier chemin (6),
et la voie d'alimentation de verrouillage (8) procure aux moyens de réglage (2) l'énergie électrique nécessaire à leur passage en position de verrouillage, sur le second chemin de commutation (5),
un ou plusieurs éléments de commutation (9, 11) activés par l'utilisateur étant insérés dans la voie d'alimentation de verrouillage (8) afin d'interrompre l'alimentation électrique du servomoteur (4), de telle sorte qu'un verrouillage de l'élément de direction ne puisse se produire qu'après une activation intentionnelle du ou des éléments de commutation (9, 11) de la part de l'utilisateur.

2. Dispositif de verrouillage électrique de direction selon la revendication 1,
**caractérisée en outre en ce que**
les moyens de réglage (2) contiennent les éléments suivants :
- le servomoteur (4) et un actionneur mécaniquement couplé à celui-ci, le servomoteur (4) occasionnant le déplacement de l'actionneur dans la position déverrouillée par sollicitation électrique sur une première entrée et dans la position verrouillée par sollicitation électrique sur une seconde entrée, et
- deux relais (5, 6) parallèles commandés par les moyens de commande (3), dont le premier relais (6) est raccordé par son premier chemin d'une part à la première entrée du servomoteur (4) et d'autre part à la voie d'alimentation de déverrouillage (7), tandis que le second relais (5) est raccordé par le second chemin de commutation d'une part à la seconde entrée du servomoteur (4) et d'autre part à la voie d'alimentation de verrouillage (8).

3. Dispositif de verrouillage électrique de direction selon la revendication 1,
**caractérisée en outre en ce que**
les moyens de réglage (2) contiennent les éléments suivants :
- un entraînement (4) et un actionneur mécaniquement couplé à celui-ci, l'entraînement (4) occasionnant le déplacement de l'actionneur dans la position verrouillée par sollicitation électrique sur une première entrée et dans la position déverrouillée par sollicitation électrique sur une seconde entrée, et
- deux relais (5, 6) parallèles qui sont commandés par les moyens de commande (3), dont un premier relais (5) est raccordé par son chemin de commutation d'une part à la première entrée de l'entraînement et d'autre part à la voie d'alimentation de verrouillage (8), et l'autre relais (6) est raccordé par son chemin d'une part à la seconde entrée de l'entraînement et d'autre part à la voie d'alimentation de déverrouillage (7).

4. Dispositif de verrouillage électrique de direction selon la revendication 1, 2 ou 3,
**caractérisé en outre en ce que**
le ou les éléments de commutation (9, 11) activés par l'utilisateur se composent d'un élément de commutation respectif d'une unité de commutation d'allumage et de démarrage électrique (10) et/ou d'une unité de commutation de vitesse (12) et/ou d'une unité de contacteur de porte.
